# EUROPEAN PATENT APPLICATION

(11) **EP 4 027 286 A1**
(43) Date of publication of application: **13.07.2022**
(21) Application number: 22151013.4
(22) Date of filing: 11.01.2022
(51) Int. Cl.: G06Q 20/02, G06Q 20/20, G06Q 20/32, G06Q 20/34, G06Q 20/42, G06Q 20/38

(54) **SYSTEMS AND METHODS FOR REDUCED INFRASTRUCTURE PAYMENT AUTHENTICATION**

(30) Priority: 11.01.2021 US 202163136119 P; 07.01.2022 US 202217647363
(71) Applicant: JPMorgan Chase Bank, N.A., New York, NY 10179 (US)
(72) Inventor: MIAH, Mizan, New York, 10179 (US); GUINDON, Patrick, New York, 10179 (US)
(74) Representative: Ter Meer Steinmeister & Partner

(57) **Abstract**

The function of authenticating payments leveraging a reduced infrastructure is disclosed. Systems and methods provide merchant services module 112 receiving a first identifier associated with a client device 130 and a second identifier associated with a set of items. The merchant services module 112 communicates with the client device 130 to generate a request for user input. The client device 130 communicates with a payment token device 140. The client device 130 generates an approval based on the communication between the payment token device and the client device 140,130. The merchant services module 112 receives approval from the client device 130. The merchant services module determines that the approval from the client device 130 corresponds to the second identifier that is associated with the set of items. The merchant services module provides the item(s) associated with the approval and the second identifier to the user of the client device.

## Description

The present disclosure generally relates to systems and methods for reduced infrastructure payment authentication.

Electronic payment transactions have continued to expand using client devices to transfer payment data to a merchant service provider. The transfer of payment data continues to pose a challenge in the security and financial industries. Additionally, the government compliance and risks associated with transfer of payment data continues to be a heavy burden on both organizations and device ecosystems.

Systems and methods for authenticating payments leveraging a reduced infrastructure are disclosed. Certain embodiments involve authenticating a payment token device using a client device to perform a socially distant payment. The merchant services module may receive a first identifier associated with a client device and a second identifier associated with one or more items that are available for purchase. The merchant services module may communicate with the client device to generate a request for user input, such as by a notification to the user of the client device. The client device may communicate with a payment token device in response to the request for user input. The client device may generate an approval based on the communication between the payment token device and the client device. The merchant services module can receive the approval from the client device. The merchant services module can determine that the approval from the client device corresponds to the second identifier that is associated with the one or more items. The merchant services module can provide the one or more items associated with the approval and the second identifier to the user of the client device.

In some aspects, the techniques described herein relate to a method including: receiving, at a merchant services module of a merchant server system and from a merchant computing system, a first identifier associated with a client device and a second identifier associated with a transaction between a user of the client device and a merchant; sending, by the merchant services module, a notification to the client device, wherein the notification triggers a request for user input at the client device; receiving, at the merchant services module, an approval communication from the client device, wherein the approval communication is based on a communication between a payment token device and the client device; determining that the approval communication corresponds to the second identifier that is associated with the transaction; initiating, by the merchant server system, a transfer of funds from an account associated with the payment token device to an account associated with the merchant; and sending, by the merchant services module and to the merchant computing system, a notification that the transaction has been approved.

In some aspects, the techniques described herein relate to a method, wherein the payment token device is a credit card.

In some aspects, the techniques described herein relate to a method, wherein the second identifier includes an order number.

In some aspects, the techniques described herein relate to a method, wherein the second identifier includes a transaction ID.

In some aspects, the techniques described herein relate to a method, wherein the second identifier includes a stock keeping unit (SKU) code.

In some aspects, the techniques described herein relate to a method, wherein the request for user input is a push notification to the client device.

In some aspects, the techniques described herein relate to a method, wherein the approval communication includes a transaction approval code.

In some aspects, the techniques described herein relate to a method, wherein the approval communication includes a digital certificate.

In some aspects, the techniques described herein relate to a method, wherein the payment token device is a near field communication (NFC) token device.

In some aspects, the techniques described herein relate to a method, wherein the merchant services module is configured as a distributed application-as-a-service and executed by a computing system of the merchant.

In some aspects, the techniques described herein relate to a merchant server system, including a merchant services module, wherein the merchant services module is configured to: receive, from a merchant computing system, a first identifier associated with a client device and a second identifier associated with a transaction between a user of the client device and a merchant; send a notification to the client device, wherein the notification triggers a request for user input at the client device; and receive an approval communication from the client device, wherein the approval communication is based on a communication between a payment token device and the client device; wherein the merchant server system is configured to: determine that the approval communication corresponds to the second identifier that is associated with the transaction; and initiate a transfer of funds from an account associated with the payment token device to an account associated with the merchant; and wherein the merchant services module is further configured to send a notification that the transaction has been approved to the merchant computing system.

In some aspects, the techniques described herein relate to a system, wherein the payment token device is a credit card.

In some aspects, the techniques described herein relate to a system, wherein the second identifier includes an order number.

In some aspects, the techniques described herein relate to a system, wherein the second identifier includes a transaction ID.

In some aspects, the techniques described herein relate to a system, wherein the second identifier includes a stock keeping unit (SKU) code.

In some aspects, the techniques described herein relate to a system, wherein the request for user input is a push notification to the client device.

In some aspects, the techniques described herein relate to a system, wherein the approval communication includes a transaction approval code.

In some aspects, the techniques described herein relate to a system, wherein the approval communication includes a digital certificate.

In some aspects, the techniques described herein relate to a system, wherein the payment token device is a near field communication (NFC) token device.

In some aspects, the techniques described herein relate to a system, wherein the merchant services module is configured as a distributed application-as-a-service and executed by a computing system of the merchant.

These illustrative embodiments are mentioned not to limit or define the disclosure, but to provide examples to aid understanding thereof. Additional embodiments are discussed in the detailed description and further description is provided there.
FIG. 1 depicts a system for processing payment authentication with a reduced infrastructure, according to aspects of the present disclosure.
FIG. 2 depicts an example of a method for authenticating a payment using a reduced infrastructure, according to aspects of the present disclosure.
FIG. 3 depicts an example of a computing system for implementing certain aspects of the present disclosure.

Embodiments are directed to systems and methods for authenticating payments using a reduced infrastructure, according to aspects of the present disclosure. For instance, a payment request can be authenticated by a communication between a client device and a payment token device and communicating an approval to a merchant service. By authenticating the payment request between the client device and the payment token device, the client device and payment token device preserves security by not requiring transferring payment authentication data (e.g., a card number, payment credentials, account details) from the client device or payment token to the merchant service. In one aspect, providing this approval reduces the nominal infrastructure used to achieve payment card industry (PCI) compliance.

The following non-limiting example is provided to introduce certain embodiments. In this example, authenticating payments leveraging a reduced infrastructure are disclosed. Certain embodiments involve authenticating a payment token device using a client device to perform a socially distant payment. The merchant services module may receive a first identifier associated with a client device and a second identifier associated with one or more items that are available for purchase. The merchant services module may communicate with the client device to generate a request for user input, such as by a notification to the user of the client device. The client device may communicate with a payment token device in response to the request for user input. The client device may generate an approval based on the communication between the payment token device and the client device. The merchant services module can receive the approval from the client device. The merchant services module can determine that the approval from the client device corresponds to the second identifier that is associated with the one or more items. The merchant services module can provide the one or more items associated with the approval and the second identifier to the user of the client device.

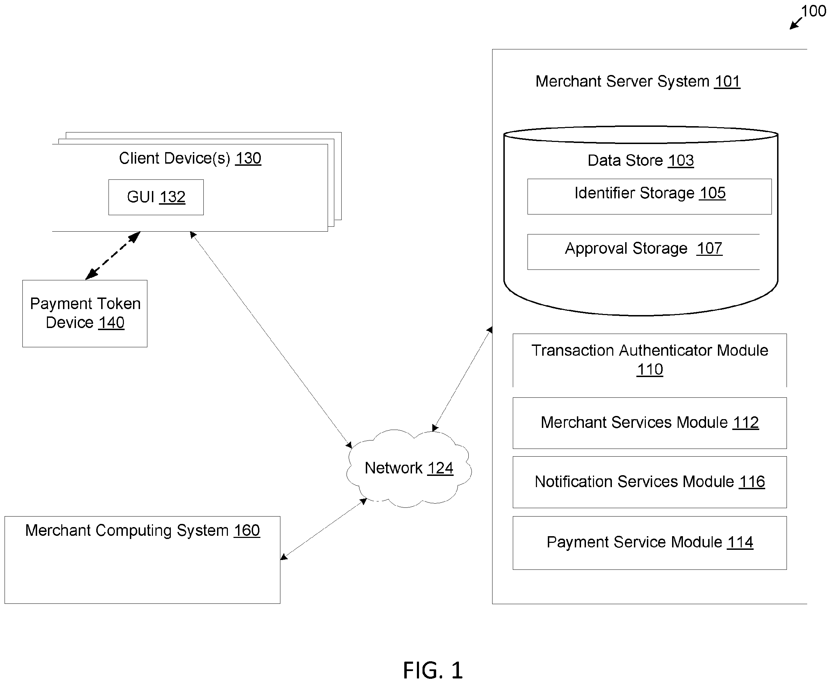

Referring now to the Figures, FIG. 1 depicts a system for processing payment authentication with a reduced infrastructure, according to aspects of the present disclosure. For instance, system 100 may include a merchant server system 101, one or more client devices 130, a payment token device 140, and a network 124. It should be noted that these entities are exemplary only; additional, fewer, and/or different entities may be provided as is necessary and/or desired.

For instance, the merchant server system 101 may be communicatively coupled to the one or more client device 130. The merchant server system 101 can include a transaction authenticator module 110, a merchant services module 112, a payment service module 114, a notification services module 116, and a data store 103. The merchant server system may be provided by a financial institution in order to facilitate acceptance of payments from consumers to merchants at the physical or electronic point of sale.

In one example, the merchant services module 112 may be executed on the merchant server system 101, or configured as a distributed application-as-a-service that can be executed by a merchant computing system. For instance, a merchant computing system 160 may be communicatively coupled (e.g., via network 124) to the merchant server system 101. The merchant's computing system may include point-of-sale (POS) hardware and/or software. The merchant services module may communicate with a merchant's systems via an application programming interface (API), or other suitable methods and/or protocols.

The client device(s) 130 may include a graphical user interface (GUI) 132 that provides an interface for receiving input from a user of the client device(s) 130 to the merchant server system 101 via the network 124. The client device(s) 130 may also generate the electronic document as a response to input received by the GUI 132 from the user of the client device(s) 130.

The merchant services module 112 may be configured to send and receive communications to and from the client device 130. For instance, the merchant services module 112 may receive a first identifier from the client device. The merchant services module may associate the first identifier with the client device and store the association in identifier storage 105. Examples of the first identifier include a phone number, an international mobile equipment identity (IMEI), a digital certificate, or the like that is unique to a particular client device.

In some aspects, the merchant services module 112 may be configured to associate multiple client devices (e.g., a smartphone, wearable device, connected car) to a user or group of users who use the client device. In one example, the merchant services module 112 may receive the first identifier via a cashier input, such as a cashier inputting a phone number into a terminal device executing an application configured to communicate with merchant services module 112. In another example, the merchant services module may be executed as a distributed software application on a computing system of a merchant and configured to communicate with merchant server system 101.

The merchant services module 112 may receive a second identifier associated with one or more items that are available for purchase by a user of the client device. The merchant services module 112 may receive the second identifier from a merchant, such as may be generated by a point-of-sale system when a user of the client device places an order. An example of the second identifier may be an order number, a transaction ID, or one or more stock keeping unit (SKU) codes that indicate one or more items that the user of the client device is requesting to purchase. The merchant services module may communicate with the client device to generate a request for user input, such as by a notification to the user of the client device.

In one example, the request for user input may be a push notification that prompts the user of the client device to authenticate with the payment token device 140. Examples of the payment token device 140 include a credit card, a multi-card token, or a digital wallet. The user may authenticate by tapping the payment token device 140 to the client device 130, such as using a near field communication (NFC), Bluetooth, magnetic, or the like. The client device 130 may generate an approval based on the authentication of the payment token device 140 by the client device. An example of the approval may be a transaction approval code, a digital certificate, an indication of proof of verified funds, or the like. The client device 130 may communicate the approval to the merchant server system 101 via network 124. The merchant server system 101 may store the approval in approval storage 107.

The transaction authenticator module 110 may generate or initiate a transfer of funds between a financial account associated with the user of the client device 130 and the payment token device 140 based on determining that the approval received from the client device and the second identifier correspond to a payment request. The transaction authenticator module 110 may communicate to the payment service module 114 to authorize a settlement of the payment request.

The merchant services module 112 may determine, based on a match between the second identifier and the approval from the client device 130 that the one or more items may be provided to the user of the client device 130 or another authorized recipient associated with the client device (e.g., a family member authorized to receive purchased items).

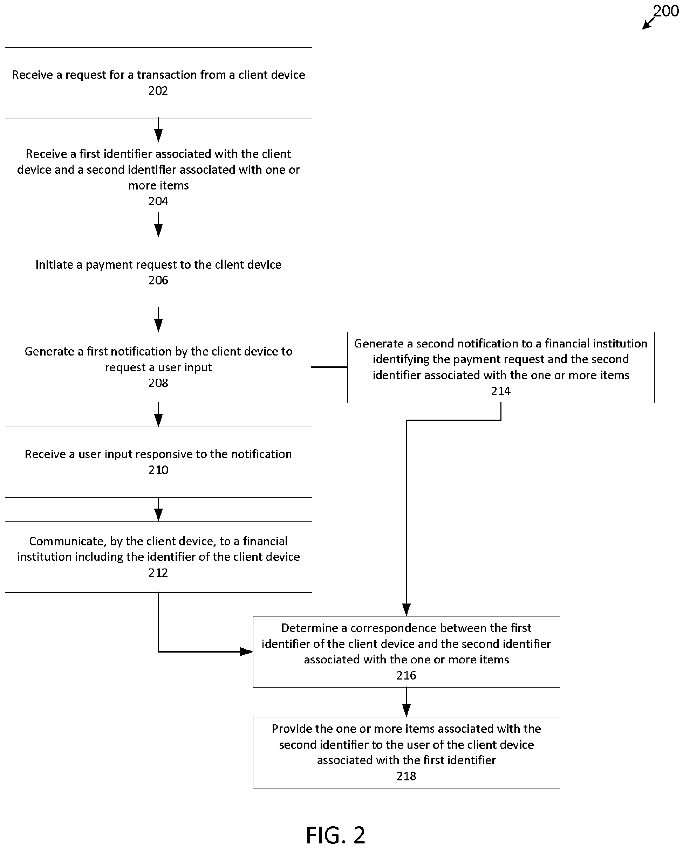

FIG. 2 depicts an example of a method for authenticating a payment using a reduced infrastructure, according to aspects of the present disclosure.

At block 202, the process 200 involves receiving a request for a transaction from a client device. In one example, a user of a client device is conducting a transaction in a drive-thru of a retail establishment. The user or the client device may request an order from the retail establishment (e.g., place an order with a cashier, make a mobile order, etc.). The order may include one or more items from a list of available products or services from the retail establishment. The request may be received at a payment terminal.

At block 204, the process 200 involves receiving a first identifier associated with the client device and a second identifier associated with one or more items. The merchant server system may receive a first identifier, such as the phone number or unique identifier of the client device. Continuing with the present example, the user or the client device may provide the first identifier to the merchant server system, such as by providing a phone number to the cashier, providing the IMEI using a wireless communication protocol, or the like.

At block 206, the process 200 involves initiating a payment request to the client device. The merchant server system may generate a payment request to the client device having a value associated with the one or more items selected for purchase. Continuing with the previous example, the merchant server system may generate a push notification using the first identifier to determine the client device for delivery of the notification. For instance, the client device may previously have registered the first identifier with a financial institution that provides a mobile application for interacting with the merchant server system.

At block 208, the process 200 involves generating a first notification by the client device to request a user input. The client device may generate a notification to the user of the client device. The client device may present, via a user interface, a request for authentication of the payment request. The process 200 may proceed to either or both of blocks 210 or 214 from block 208.

In one aspect, the process 200 may proceed from block 208 to block 214. At block 214, the process 200 involves generating a second notification to a financial institution identifying the payment request and the second identifier associated with the one or more items. Continuing with the present example, the merchant server system may generate an invoice including the second identifier and an aggregate value of the one or more items selected for purchase. The process 200 may proceed from block 214 to block 216.

Returning to block 208, in another aspect, the process can proceed from block 208 to block 210. At block 210, the process 200 involves receiving a user input responsive to the notification. Continuing with the present example, the user may respond to the notification by tapping, or brining into close proximity, a payment token device to the client device, such as using a contact or NFC interface.

At block 212, the process 200 involves communicating, by the client device, to a financial institution including the identifier of the client device. The client device 130 may generate an approval based on the authentication of the payment token device 140 by the client device. An example of the approval may be a transaction approval code, a digital certificate, an indication of proof of verified funds, or the like. The client device 130 may communicate the approval to the merchant server system 101 via network 124. Continuing with the present example, the client device may generate an approval based on the user authenticating the payment request using the NFC payment token device. The client device can communicate the approval code to the merchant. The process 200 may proceed from block 212 to block 216.

At block 216, the process 200 involves determining a correspondence between the first identifier of the client device and the second identifier associated with the one or more items. Continuing with the present example, the merchant services module can determine that the one or more items correspond to an order placed by the user of the client device. The merchant services module can determine that an order corresponds to the client device and that the value of the order matches the authenticated payment request associated with the client device.

At block 218, the process 200 involves providing the one or more items associated with the second identifier to the user of the client device associated with the first identifier. Continuing with the present example, the merchant can release the items of the order after payment has been authenticated and the transaction has been completed. In some cases, the items can be a digital or physical product. In accordance with embodiments, the merchant may receive a notification at, e.g., an interface of the merchant service module or the merchant server system, that the transaction has been approved and/or that payment for the transactions has been initiated and/or received.

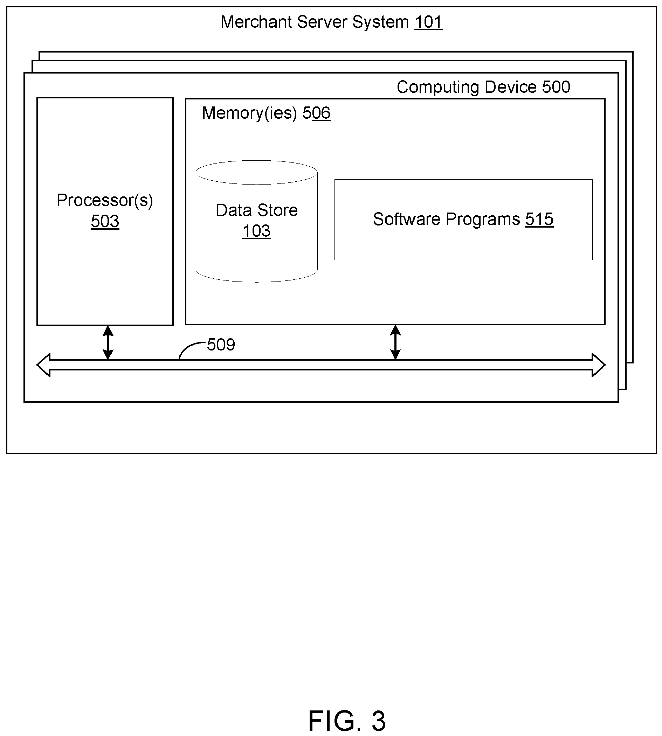

FIG. 3 depicts an example of a computing system for implementing certain aspects of the present disclosure. For example, FIG. 3 depicts an example of computing device 500. The implementation of computing device 500 could be used for one or more of merchant server systems 101. The depicted example of the computing device 500 includes a processor 503 coupled to a memory 506. The processor 503 executes computer-executable program code stored in memory 506, such as software programs 515. The processor 503 and the memory 506 may be coupled by a bus 509. In some examples, the bus 509 may also be coupled to one or more network interface devices (not shown).

Additional embodiments and examples may be found in the attached Appendix, the contents of which are hereby incorporated by reference.

It should be recognized that the embodiments and examples disclosed herein are not exclusive to each other; features and elements from one embodiment may be used with others as is necessary and/or desired. Hereinafter, general aspects of implementation of the systems and methods of the invention will be described.

The system of the invention or portions of the system of the invention may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement the invention may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that is capable of implementing the steps of the processes of the invention.

The processing machine used to implement the invention may utilize a suitable operating system. Thus, embodiments of the invention may include a processing machine running the iOS operating system, the OS X operating system, the Android operating system, the Microsoft Windows^{™} operating systems, the Unix operating system, the Linux operating system, the Xenix operating system, the IBM AIX^{™} operating system, the Hewlett-Packard UX^{™} operating system, the Novell Netware^{™} operating system, the Sun Microsystems Solaris^{™} operating system, the OS/2^{™} operating system, the BeOS^{™} operating system, the Macintosh operating system, the Apache operating system, an OpenStep^{™} operating system or another operating system or platform.

It is appreciated that in order to practice the method of the invention as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above may, in accordance with a further embodiment of the invention, be performed by a single component. Further, the processing performed by one distinct component as described above may be performed by two distinct components. In a similar manner, the memory storage performed by two distinct memory portions as described above may, in accordance with a further embodiment of the invention, be performed by a single memory portion. Further, the memory storage performed by one distinct memory portion as described above may be performed by two memory portions.

Further, various technologies may be used to provide communication between the various processors and/or memories, as well as to allow the processors and/or the memories of the invention to communicate with any other entity; i.e., so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of the invention. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of the invention may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments of the invention. Illustratively, the programming language used may include assembly language, Ada, APL, Basic, C, C++, COBOL, dBase, Forth, Fortran, Java, Modula-2, Pascal, Prolog, REXX, Visual Basic, and/or JavaScript, for example. Further, it is not necessary that a single type of instruction or single programming language be utilized in conjunction with the operation of the system and method of the invention. Rather, any number of different programming languages may be utilized as is necessary and/or desirable.

Also, the instructions and/or data used in the practice of the invention may utilize any compression or encryption technique or algorithm, as may be desired. An encryption module might be used to encrypt data. Further, files or other data may be decrypted using a suitable decryption module, for example.

As described above, the invention may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in the invention may take on any of a variety of physical forms or transmissions, for example. Illustratively, the medium may be in the form of paper, paper transparencies, a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors of the invention.

Further, the memory or memories used in the processing machine that implements the invention may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the system and method of the invention, a variety of "user interfaces" may be utilized to allow a user to interface with the processing machine or machines that are used to implement the invention. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method of the invention, it is not necessary that a human user actually interact with a user interface used by the processing machine of the invention. Rather, it is also contemplated that the user interface of the invention might interact, i.e., convey and receive information, with another processing machine, rather than a human user. Accordingly, the other processing machine might be characterized as a user. Further, it is contemplated that a user interface utilized in the system and method of the invention may interact partially with another processing machine or processing machines, while also interacting partially with a human user.

It will be readily understood by those persons skilled in the art that the present invention is susceptible to broad utility and application. Many embodiments and adaptations of the present invention other than those herein described, as well as many variations, modifications and equivalent arrangements, will be apparent from or reasonably suggested by the present invention and foregoing description thereof, without departing from the substance or scope of the invention.

Accordingly, while the present invention has been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. **Method** comprising:
- receiving (204), at a merchant services module (112)of a merchant server system (101) and from a merchant computing system (160), a first identifier associated with a client device (130) and a second identifier associated with a transaction between a user of the client device and a merchant;
- sending, by the merchant services module (112), a notification to the client device (130), wherein the notification triggers a request for user input at the client device;
- receiving, at the merchant services module (112), an approval communication from the client device, wherein the approval communication is based on a communication between a payment token device (140) and the client device (130);
- determining that the approval communication corresponds to the second identifier that is associated with the transaction;
- initiating, by the merchant server system (101), a transfer of funds from an account associated with the payment token device (130) to an account associated with the merchant; and
- sending, by the merchant services module (112)and to the merchant computing system, a notification that the transaction has been approved.

2. Method of claim 1, wherein the payment token device (140) is a credit card.

3. The method of claim 1 or 2, wherein the second identifier includes an order number or a transaction ID or a stock keeping unit (SKU) code.

4. The method of claim 1, 2 or 3, wherein the request for user input is a push notification to the client device.

5. The method of one of prior claims, wherein the approval communication includes a transaction approval code or a digital certificate.

6. The method of one of prior claims, wherein the payment token device (140) is a near field communication (NFC) token device.

7. The method of one of prior claims, wherein the merchant services module is configured as a distributed application-as-a-service and executed by a computing system of the merchant.

8. **Server system,** suitable for a merchant use, including a merchant services module (112), wherein the merchant services module is configured to:
- receive, from a merchant computing system (101), a first identifier associated with a client device (130) and a second identifier associated with a transaction between a user of the client device and a merchant;
- send a notification to the client device (130), wherein the notification triggers a request for user input at the client device; and
- receive an approval communication from the client device, wherein the approval communication is based on a communication between a payment token device (140) and the client device (130);
- wherein the merchant computing system (101) is configured to:
-- determine that the approval communication corresponds to the second identifier that is associated with the transaction; and
-- initiate a transfer of funds from an account associated with the payment token device to an account associated with the merchant;
-- wherein the merchant services module (112) is further configured to send a notification that the transaction has been approved to the merchant computing system.

9. The system of claim 8, wherein the payment token device (140) is a credit card.

10. The system of one of prior claim 8 ff, wherein the second identifier includes an order number or includes a transaction ID Or includes a stock keeping unit (SKU) code.

11. The system of one of prior claim 8 ff, wherein the request for user input is a push notification to the client device.

12. The system of claim one of prior 8 ff, wherein the approval communication includes a transaction approval code.

13. The system of claim one of prior 8 ff, wherein the approval communication includes a digital certificate.

14. The system of claim one of prior 8 ff, wherein the payment token device (140) is a near field communication (NFC) token device.

15. The system of one of prior claim 8 ff, wherein the merchant services module (112) is configured as a distributed application-as-a-service and executed by a computing system of the merchant.
